# EUROPÄISCHE PATENTANMELDUNG

(11) **EP 0 578 128 A1**
(43) Veröffentlichungstag der Anmeldung: **12.01.1994**
(21) Anmeldenummer: 93110486.3
(22) Anmeldetag: 01.07.1993
(51) Int. Cl.: B29C 45/58, B29C 45/20

(54) **Plastifizierzylinder an einer Kunststoff-Spritzgiessmaschine**

(30) Priorität: 09.07.1992 DE 4222432
(71) Anmelder: Hehl, Karl, D-72290 Lossburg (DE)
(72) Erfinder: Hehl, Karl, D-72290 Lossburg (DE)
(74) Vertreter: Frank, Gerhard, Dipl.-Phys.

(57) **Zusammenfassung**

Ein Plastifizierzylinder (11) für eine Kunststoff-Spritzgießmaschine besitzt einen am Plastifizierzylinder befestigten Düsenkörper (12). In einem Raum (R) ist rotierbar eine Förderschnecke (31) angeordnet, dessen Innendurchmesser etwa dem Durchmesser der Förderschnecke entspricht und der sich im Bereich ausgehend von einem Eingangsdurchmesser am Übergangsbereich zwischen Plastifizierzylinder (11) und Düsenkörper (12) bis auf die lichte Weite des Düsenkörpers (12) verjüngt. Im Übergangsbereich ist ein Raum zur räumlichen Festlegung eines Adapters (34) mit einer quer zur Spritzachse gelegenen Durchtrittsöffnung vorgesehen, der den Innendurchmesser (d) des Raumes (R) auf den Eingangsdurchmesser (e) des Düsenkörpers (12) überführt. Dadurch ist es möglich, daß beim Plastifizierzylinderwechsel der Düsenkörper nicht unbedingt mit ausgetauscht werden muß.

## Beschreibung

Die Erfindung betrifft einen Plastifizierzylinder an einer Kunststoff-Spritzgießmaschine nach dem Oberbegriff des Anspruches 1.

Ein derartiger Plastifizierzylinder ist beispielsweise aus der DE-PS 41 05 731 bekannt. Allgemein und so auch bei den eingangs genannten Plastifizierzylindern ist es üblich, daß Plastifizierzylinder mit einem unterschiedlichen Innendurchmesser für verschiedene Durchmesser von Förderschnecken verwendet werden. Da der Durchmesser am Übergang zum Düsenkörper in Abhängigkeit vom Durchmesser der Förderschnecke ausgebildet ist, um eine kontinuierliche Mantelfläche, insbesondere im Übergangs bereich zu gewährleisten, ist es erforderlich, daß jedem Plastifizierzylinder jeweils nur ein Düsenkörper zugeordnet wird. Bei jedem Wechsel des Plastifizierzylinders muß daher auch der Düsenkörper mit ausgewechselt werden, was beträchtlich zur Kostensteigerung beiträgt, da stets mit einem Plastifizierzylinder auch ein zugehöriger Düsenkörper bereitgestellt werden muß. Dies ist selbst dann der Fall, wenn der Außendurchmesser des jeweiligen Plastifizierzylinders unverändert ist, weil z.B. gleichbleibende Heizmanschetten auf der Oberfläche des jeweiligen Plastifizierzylinders angeordnet sind. Daher ist es dann nötig, obwohl der Düsenkörper hinsichtlich seiner Anschlußorgane ohne weiteres auf den neuen Plastifizierzylinder passen würde, trotzdem den Düsenkörper auszuwechseln.

Aus der älteren Patentanmeldung P 41 05 730 ist es bekannt, um einen schnellen Wechsel des Düsenkörpers auf einfache Weise und mit geringen physischen Kräften und mit einfachem Werkzeug durchzuführen, eine Vielzahl von etwa auf einer Kreislinie angeordneten Gewindebolzen vorzusehen, mit deren Hilfe der Düsenkörper und der Plastifizierzylinder im Bereich feinbearbeiteter Stirnflächen axial gegeneinander preßbar sind. Eine den Plastifizierzylinder im düsenseitigen Bereich umschließende und den Düsenkörper teilweise axial übergreifende Verbindungsmuffe ist am Plastifizierzylinder befestigt, wobei die Gewindebolzen mit Innengewinden der Verbindungsmuffe in Eingriff stehen und dadurch axial abgestützt sind, so daß sie an Preßflächen des Düsenkörpers stirnseitig angreifen können. Diese Ausbildungsform erleichtert einen schnellen Wechsel und bildet eine bauliche Voraussetzung für eine modulare Bauweise des Verbindungssystems zwischen Plastifizierzylinder und Düsenkörper.

Aus der DE-OS 21 21 270 ist es seit langem bekannt, den Spritzkopf von Schneckenextrudern durch verschiedene aneinandergereihte Scheiben beliebig zu formen. Diese Formung des Spritzkopfes ist erforderlich, um den Massenstrang vor dem Austritt aus dem Spritzkopf zu verformen. Die komplizierte Form des Inneren des Spritzkopfes erschwert grundsätzlich die Kühlung zumal bei den hierfür erforderlichen Temperaturen als auch die Reinigung dieses Bereichs, weshalb vorgeschlagen wurde, den Spritzkopf durch entsprechende Scheiben beliebig zu zergliedern. Die somit durch unterschiedliche Materialsorten erforderlichen unterschiedlichen Gestaltungen des Inneren des Spritzkopfes sind jedoch nicht dafür bestimmt, einen Übergangsbereich zwischen einem Plastifizierzylinder und einem Düsenkörper zu bilden.

Ausgehend von diesem Stand der Technik liegt der Erfindung die Aufgabe zugrunde, einen Plastifizierzylinder der eingangs genannten Gattung derart weiterzubilden, daß beim Plastifizierzylinderwechsel der Düsenkörper nicht unbedingt mit ausgetauscht werden muß.

Diese Aufgabe wird durch die Merkmale des Anspruches 1 gelöst.

Zwar muß immer noch der Düsenkörper vom Plastifizierzylinder abgenommen werden, jedoch kann nach dem Austausch des Plastifizierzylinders der Düsenkörper auf den ausgewechselten Plastifizierzylinder wieder aufgesetzt werden. Wesentlich ist, daß zwischen dem Enddurchmesser des die Förderschnecke aufnehmenden Innenraums des Plastifizierzylinders und dem Eingangsdurchmesser des Düsenkörpers ein Adapter vorgesehen wird, der die beiden Randgrößen ineinander überführt. Dadurch werden die grundsätzlichen Voraussetzungen dafür geschaffen, daß bei einer Vielzahl von Plastifizierzylindern mit unterschiedlichem Innendurchmesser bedarfsweise der ein- und derselbe Düsenkörper verwendet werden kann, so daß sowohl die Kosten als auch der Platzbedarf beim Käufer der Spritzgießmaschine verringert werden kann, die durch die ansonsten notwendige Vielzahl von Düsenkörpern hervorgerufen sind.

Grundsätzlich ist es dabei gleichgültig, ob der Adapter dem Düsenkörper oder dem Plastifizierzylinder zugeordnet ist und ob er sich nur auf einen an die Innendurchmesser angrenzenden Bereich beschränkt oder ob er sich bis in den Außenbereich von Düsenkörper und Plastifizierzylinder erstreckt und beispielsweise von einer Verbindungsmuffe dort übergriffen wird. Dabei werden die grundsätzlichen Voraussetzungen dafür geschaffen auch die Antriebsmechanismen für eine Verschlußdüse unverändert zu lassen, so daß der Adapter sowohl bei Verschlußdüsen als auch bei offenen Düsen eingesetzt werden kann.

Bei einer Ausbildung nach den Ansprüchen 2 bis 4 wird als Adapter ein Adapterring vorgesehen, der am Düsenkörper angeordnet ist und dort in einer kreisförmigen Ausnehmung gehalten ist. Dies verringert die Produktionskosten insofern, als ja stets der Düsenkörper weitgehend beibehalten werden soll und lediglich der Plastifizierzylinder ausgewechselt wird. Insofern muß nur am Düsenkörper die kreisförmige Ausnehmung geschaffen werden und nicht an einer Vielzahl von Plastifizierzylindern. Grundsätzlich wird dabei der Eingangsdurchmesser des Düsenkörpers so festgelegt, daß er für die Vielzahl aller Fälle kleiner ist als der Durchmesser auch einer kleinen Förderschnecke, um eine Aufweitung des hohen Drücken ausgesetzten Raumes zu vermeiden.

Bei einer Ausbildung nach den Ansprüchen 5 bis 8 werden die Angriffspunkte für eventuell mögliche "Verbackungen" durch konstruktive Maßnahmen verringert. So ist zum Beispiel bei einer Ausbildung nach Anspruch 5 die Tiefe der Ausnehmung geringfügig kleiner als die Stärke des Adapterringes, so daß beim Anpressen des Düsenkörpers an den Plastifizierzlyinder zunächst die Verbindung zwischen dem Adapterring und den aneinandergepreßten Teilen geschaffen wird, so daß schon dadurch keine Zwischenräume zwischen den zu verbindenden Teilen verbleiben können, in die Material oder korrosive Gase eindringen könnten, die insbesondere bei hohen Hitzegraden eine weitere Verfestigung der miteinander verspannten Teile bewirken können. Dabei ist zu beachten, daß bereits jetzt, aber auch in Zukunft in zunehmendem Maße Materialien auch auf dem keramischen Sektor verarbeitet werden, die höhere Temperaturen erforderlich machen. Bei einer Ausbildung nach Anspruch 7 werden zudem die Übergänge senkrecht zu den Übergangsflächen gehalten, um zum einen eine leichtere Bearbeitung bei der Herstellung zu ermöglichen, zum anderen aber auch um die Ablösbarkeit zu erleichtern, da bei einer derartigen Anordnung die aneinanderstoßenden Stirnflächen der zu verbindenden Teile stets senkrecht zur Mantelfläche stehen, so daß die Wahrscheinlichkeit eines Eindringens von Material auf ein Minimum reduziert wird.

Eine Ausbildung nach den Ansprüchen 8 und 9 schafft die grundsätzlichen Voraussetzungen, die erforderlich sind, um eine schnelle Abnahme des Düsenkörpers von dem auszutauschenden Plastifizierzylinder durchzuführen. Zum einen wird die Kraft, die aufzubringen ist, um die Teile aneinander zu pressen, durch die Vielzahl der Gewindebolzen verringert und zum anderen sind die Gewindebolzen einem Bereich angeordnet, der sowohl der Hitze als auch den Korrosionsprozessen nicht so ausgesetzt ist, wie ein weiter innen liegender Bereich.

Schließlich werden insgesamt die Voraussetzungen für ein Baukastensystem gemäß einer Ausgestaltung nach Anspruch 12 geschaffen, so daß aus wenigen Teilen eine Vielzahl unterschiedlicher Plastifizierzylinder aufgebaut werden kann, wobei die übrigen an der Maschine vorgesehenen Teile, wie z.B. die Antriebseinheiten für die Düsennadel als auch die Düsennadel und Thermofühler in unveränderter Form beibehalten werden können. Dabei ist es grundsätzlich auch nicht mehr erforderlich, derartige Teile vom Düsenkörper abzutrennen.

Weitere Vorteile ergeben sich aus den Unteransprüchen. Im folgenden wird die Erfindung anhand eines Ausführungsbeispieles näher erläutert. Es zeigen:
- Fig. 1: Den teilweise vertikal geschnittenen Plastifizierzylinder in Seitenansicht,
- Fig. 2: den düsenseitigen Abschnitt des Plastifizierzylinder in vergrößerter und perspektivischer Darstellung,
- Fig. 3,4: einen Schnitt durch den Düsenkörper mit zwei verschiedenen Adapterringen.

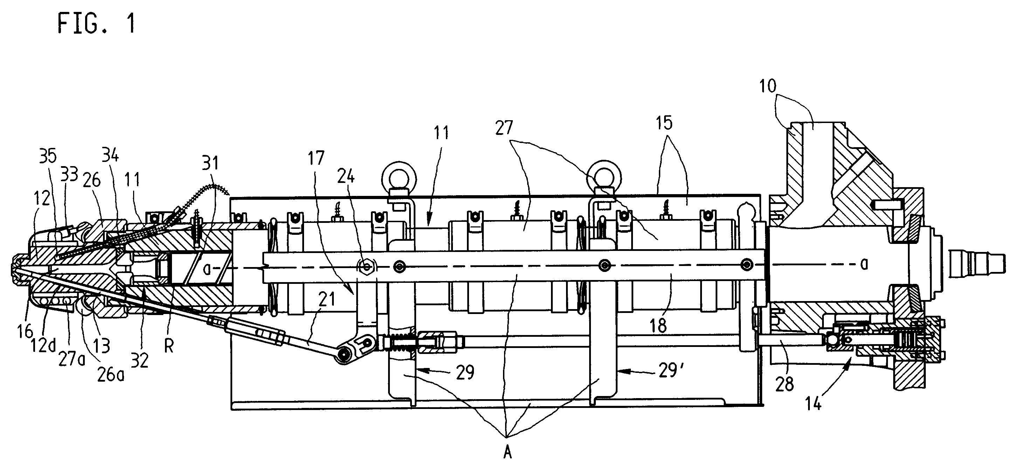

Figur 1 zeigt den Plastifizierzylinder 11, der rückseitig von einem Trägerblock 10 aufgenommen und von einem Schutzskelett A umschlossen ist. Aus dem Schutzskelett ragt der Plastifizierzylinder stirnseitig heraus. Das Schutzskelett umfaßt Fassungselemente 29,29', die den Plastifizierzylinder 11 in Bohrungen aufnehmen und Schutzbleche 15 tragen, die den Plastifizierzylinder im Mittelabschnitt mit einem rechteckigen Querschnitt umschließen. Das Schutzskelett umfaßt ferner Schienen 18, mit denen der Plastifizierzylinder auf stationären Laufrollen für das Heranfahren an die Spritzgießform abgestützt ist.

Stirnseitig ist der Plastifizierzlyinder mit einem Düsenkörper 12 versehen, dessen die Düsenmündung 12a abschließende Düsennadel 13 spitzwinklig zur Spritzachse a-a verläuft. Ein hydraulischer Antriebszylinder 14 zum Verschieben der Düsennadel 13 in ihre Schließ- bzw. Offenstellung ist im Bereich des Trägerblockes 10 angeordnet. Über stabförmige Elemente 28,21 wird die Düsennadel 13 von der Antriebseinheit 14 betätigt, wobei ein Schwenkhebel 17 um eine Achse 24 schwenkbar ist, der die aus den stabförmigen Elementen bestehende kraftübertragende Brücke trägt.

Im Innern des Plastifizierzylinders ist ein zylindrischer Raum R vorgesehen, in dem die Förderschnecke rotierbar angeordnet ist. Der Innendurchmesser d,d' dieses Raumes R entspricht etwa dem Durchmesser der Zylinderbohrung. Dieser Innendurchmesser verjüngt sich ausgehend vom Innendurchmesser d am Ende des Plastifizierzylinders innerhalb des Düsenkörpers bis auf die lichte Weite des Düsenkanals 16 bzw. der Düsenmündung 12a. Im Übergangsbereich zwischen Plastifizierzylinder 11 und Düsenkörper 12 ist nun ein Raum zur räumlichen Festlegung eines Adapters mit einer quer zur Spritzachse gelegenen Durchtrittsöffnung vorgesehen, der den Innendurchmesser des Raumes R auf den Eingangsdurchmesser e des Düsenkörpers 12 überführt. Dabei wird der Eingangsdurchmesser e des Düsenkörpers grundsätzlich so gewählt, daß er für die Vielzahl der Fälle kleiner ist als der Innendurchmesser d des Raumes R auch bei kleinster Förderschnecke 31.

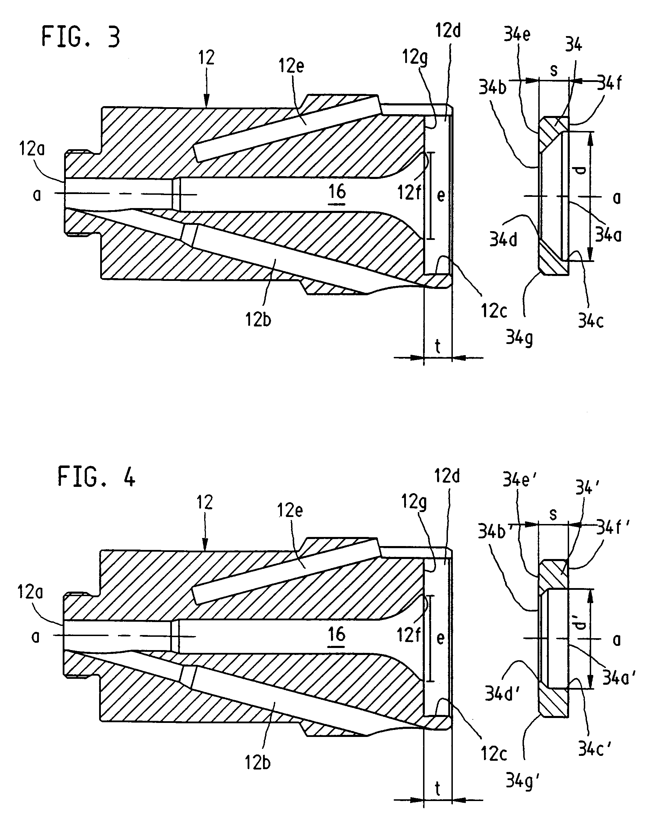

Als Adapter wird ein Adapterring 34,34' vorgesehen. Aus den Figuren 3 und 4 ergeben sich bei identischem Düsenkörper 12 zwei unterschiedliche Adapterringe. Der Adapterring der Figur 3 ist dabei für eine Förderschnecke 31 mit größerem Durchmesser vorgesehen als der Adapterring der Figur 4. Deutlich ist bei einem Vergleich der Figuren 3 und 4 zu erkennen, daß durch den Adapterring bei kleiner werdender Förderschnecke der Raum R verlängert wird, da der Übergang von den unterschiedlichen Innendurchmessern d,d' auf den Eingangsdurchmesser e des Düsenkörpers 12 im unmittelbar an den Düsenkörper angrenzenden Bereich des Adapterringes stattfindet. Die Figuren 3 und 4 unterscheiden sich lediglich hinsichtlich des Adapterringes 34 bzw. 34', wobei identische Teile des Adapterringes grundsätzlich mit gleichen Bezugszeichen gekennzeichnet und gleichartige Teile jeweils durch einen hochgesetzten Strich unterschieden sind.

In beiden Fällen entspricht die dem Plastifizierzylinder 11 zugewandte Öffnung 34a,34a' dem Innendurchmesser d,d' des Raumes R und somit etwa dem Durchmesser der Förderschnecke 31 bzw. der Zylinderbohrung und die dem Düsenkörper 12 zugewandte Öffnung 34b,34b' des Adapterringes 34,34' dem Eingangsdurchmesser e des Düsenkörpers 12.

Im Ausführungsbeispiel wird als Raum zur Festlegung des Adapterringes eine kreisförmige Ausnehmung 12d am Düsenkörper 12 vorgesehen, die symmetrisch zur Spritzachse a-a angeordnet ist. Grundsätzlich besteht jedoch auch die Möglichkeit, den Raum zur Festlegung des Adapters am Plastifizierzylinder 11 anzuordnen oder den Adapterring bis in den Außenbereich von Plastifizierzylinder 11 oder Düsenkörper 12 zu führen, wo er dann von den Anschlußorganen zwischen Plastifizierzylinder und Düsenkörper über- oder durchgriffen wird. Im Ausführungsbeispiel befindet sich die kreisförmige Ausnehmung 12d zwischen zwei spitzwinklig zur Spritzachse a-a angeordneten Bohrungen 12b,12e, die für die Aufnahme von Düsennadel 13 und Thermofühler 35 bestimmt sind.

Die Tiefe t der Ausnehmung 12d ist geringfügig kleiner als die Stärke s,s' des Adapterringes 34,34', so daß beim Aufeinanderpressen von Düsenkörper und Plastifizierzylinder 11 auf jeden Fall eine innige Verbindung zwischen den drei zu verbindenden Teilen Düsenkörper 12, Adpaterring 34,34' und Plastifizierzylinder 11 stattfindet.

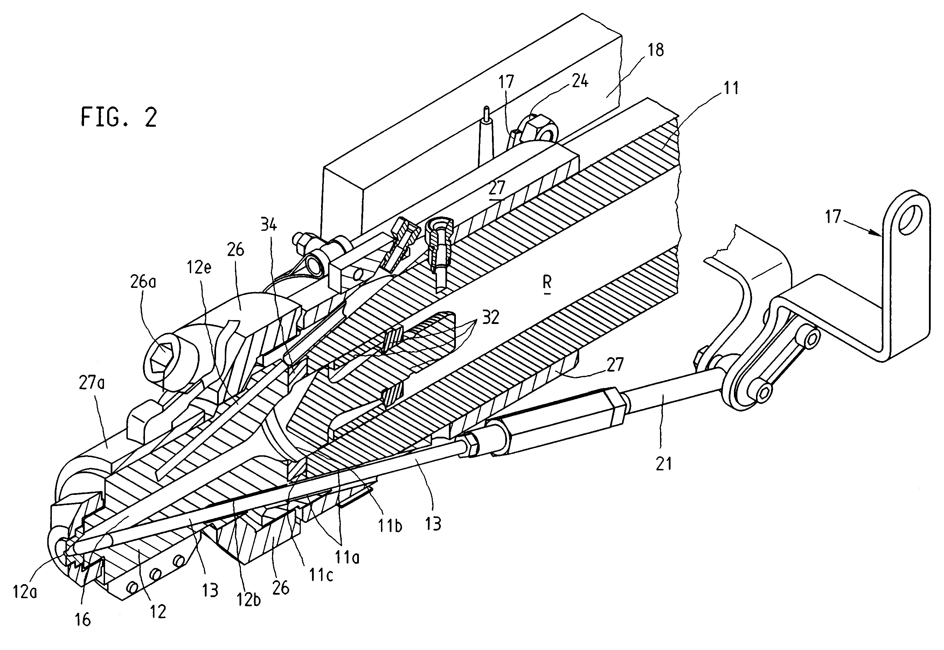

Wie insbesondere aus Figur 2 ersichtlich, ergibt sich im zusammengebauten Zustand eine kontinuierlich ineinander übergehende Mantelfläche ausgehend vom Raum R über die jeweiligen Adapterringe 34,34' bis zum Düsenkanal 16. Um nun aber sowohl hinsichtlich der Bearbeitung als auch hinsichtlich der späteren Ablösbarkeit der Einzelteile eine Erleichterung zu schaffen, sind an den Übergangsflächen zu den jeweiligen Stirnflächen 12g,34e,34f,34e',12g' Kanten 11b,34c,34c',34d,34d',12f' vorgesehen, die senkrecht zu den Übergangsflächen stehen. Die Stirnflächen selbst sind nur in einem kleinen an die innere Mantelfläche des Plastifizierzylinders angrenzenden ringförmigen Bereich feinbearbeitet, was um das Vielfache geringere Anpreßdrücke für die Verbindung von Düsenkörper 12 und Plastifizierzylinder 11 erforderlich macht und schon mit geringeren Drücken eine optimale Verbindung zwischen den Teilen gewährleistet

Um Schwierigkeiten beim Zusammenbau von vornherein entgegenzuwirken, besitzt der Adapterring Abkantungen 34g an den dem Düsenkörper zugewandten Stirnflächen 34e,34e'. Im konkreten Ausführungsbeispiel erfolgt die Verbindung von Düsenkörper 12 und Plastifizierzylinder 11, wie aus der älteren Patentanmeldung P 41 05 731 bekannt, über eine Vielzahl von Gewindebolzen 26a, die zusammen mit einer Verbindungsmuffe 26 die Verbindung der beiden Teile gewährleisten. Dabei umschließt die Verbindungsmuffe 26 den Düsenkörper und übergreift ihn teilweise und ist mit einem Gewinde am Plastifizierzylinder 11 befestigt, der seinerseits über ein entsprechendes Außengewinde verfügt. An der Verbindungsmuffe 26 sind die Gewindebolzen 26a axial abgestützt und greifen dort in entsprechende Gewinde ein. Stirnseitig greifen die Gewindebolzen 26a in Preßflächen am Düsenkörper ein, so daß beim Anziehen der Gewindebolzen der Düsenkörper gegen den Plastifizierzylinder gepreßt wird. Zwar stellt die beim Düsenwechsel nicht zu lösende Gewindeverbindung zwischen Verbindungsmuffe und Plastifizierzylinder eine thermische Brücke dar, doch liegt die Temperatur im Bereich der Gewindebolzen unter der relativ hohen Temperatur im Düsenkörper und Plastifizierzylinder. Da die Gewindebolzen wesentlich kürzer sind als bei üblichen Verbindungen können korrosive Gase keine Schäden anrichten wie bei bekannten Plastifizierzylindern üblich. Durch die Vielzahl der Gewindebolzen 26a kann bei einem wesentlich geringeren Einsatz an physischer Kraft sowie mit leichtem und leicht zu handhabenden Werkzeug der Düsenkörper ausgewechselt werden. Das Montage- bzw. Servicepersonal kann daher das Werkzeug in einer Aktentasche mitführen.

Trotzdem können beliebige Anschlüsse zwischen Düsenkörper und Plastifizierzylinder vorgesehen werden. Bei Verwendung von Plastifizierzylindern mit unterschiedlichen Innendurchmessern d,d', denen üblicherweise wenigstens ein Düsenkörper 12 zugeordnet ist, sind bevorzugterweise die Anschlußorgane am Plastifizierzylinder zum Anschluß des Düsenkörpers 12 stets identisch.

Grundsätzlich werden somit die Voraussetzungen für ein Baukastensystem bzw. einen modularen Aufbau eines Plastifizierzylinders geschaffen, wobei wenigstens ein Düsenkörper 12 mit Anschlußorganen zum Anschluß an einen Plastifizierzylinder, Plastifizierzylinder 11 mit unterschiedlichen Innendurchmessern d,d', aber stirnseitig identischen Anschlußorganen für den Düsenkörper 12 sowie dem jeweiligen Plastifizierzylinder 11 zugeordnete Adapterringe vorgesehen sind, die die unterschiedlichen Innendurchmesser d,d' auf den Eingangsdurchmesser e des Düsenkörpers 12 überführen. Dem Plastifizierzylinder 11 als auch dem Düsenkörper 12 können stets identische Heizmanschetten 27,27a zugeordnet werden.

## Patentansprüche

1. Plastifizierzylinder (11) an einer Kunststoff-Spritzgießmaschine mit einem am Plastifizierzylinder befestigten Düsenkörper (12) und mit einer Förderschnecke (31), die rotierbar in einem Raum (R) angeordnet ist, dessen Innendurchmesser (d,d') etwa dem Durchmesser der Förderschnecke (31) entspricht und der sich im Bereich des Düsenkörpers ausgehend von einem Eingangsdurchmesser am Übergangsbereich zwischen Plastifizierzylinder und Düsenkörper bis auf die lichte Weite des Düsenkanals (16) verjüngt, dadurch gekennzeichnet, daß im Übergangsbereich ein Raum zur räumlichen Festlegung eines Adapters mit einer quer zur Spritzachse gelegenen Durchtrittsöffnung vorgesehen ist, der den Innendurchmesser des Raumes (R) auf den Eingangsdurchmesser (e) überführt.

2. Plastifizierzylinder nach Anspruch 1, dadurch gekennzeichnet, daß als ein Adapter ein Adapterring (34,34') vorgesehen ist, dessen dem Plastifizierzylinder (11) zugewandte Öffnung (34a,34a') dem Innendurchmesser (d,d') des Raumes (R) und dessen dem Düsenkörper (12) zugewandte Öffnung (34b,34b') dem Eingangsdurchmesser (e) des Düsenkörpers (12) entspricht.

3. Plastifizierzylinder nach Anspruch 1 oder 2, dadurch gekennzeichnet, daß der Raum zur Festlegung des Adapters als kreisförmige, symmetrisch zur Spritzachse (a-a) angeordnete Ausnehmung (12d) am Düsenkörper (12) vorgesehen ist.

4. Plastifizierzylinder nach Anspruch 3, dadurch gekennzeichnet, daß die Ausnehmung (12d) zwischen zwei spitzwinklig zur Spritzachse (a-a) angeordneten Bohrungen (12b,12e) zur Aufnahme einer Düsennadel (13) und eines Thermofühlers (35) angeordnet ist.

5. Plastifizierzylinder nach einem der vorhergehenden Ansprüche, dadurch gekennzeichnet, daß die Tiefe (t) der Ausnehmung (12d) geringfügig kleiner ist als die Stärke (s,s') des Adapters.

6. Plastifizierzylinder nach einem der vorhergehenden Ansprüche, dadurch gekennzeichnet, daß die Innenflächen von Raum (R), Adapter und Düsenkanal (16) im zusammengebauten Zustand eine kontinuierlich ineinander übergehende Mantelfläche bilden.

7. Plastifizierzylinder nach Anspruch 6, dadurch gekennzeichnet, daß die Innenflächen an den zwischen Raum (R) und Adapter und an den zwischen Adapter und Düsenkörper (12) liegenden Übergangsflächen Kanten (11b,34c,34c',34d,34d',12f) aufweisen, die senkrecht zu den Übergangsflächen stehen.

8. Plastifizierzylinder nach einem der vorhergehenden Ansprüche, dadurch gekennzeichnet, daß Stirnflächen (12g,34e,34e', 34f,34f',11c) von Düsenkörper (12), Adapter und Plastifizierzylinder(11) nur in einem kleinen, an die innere Mantelfläche des Plastifizierzylinders angrenzenden ringförmigen Bereich feinbearbeitet sind.

9. Plastifizierzylinder nach einem der vorhergehenden Ansprüche, dadurch gekennzeichnet, daß eine den Düsenkörper (12) umschließende und teilweise axial übergreifende Verbindungs muffe (26) am Plastifizierzylinder (11) befestigt ist, die von mit ihr in Eingriff stehenden Gewindebolzen (26a) durchgriffen ist, die stirnseitig am Düsenkörper (12) angreifen.

10. Baukastensystem für einen Plastifizierzylinder, insbesondere nach einem der vorhergehenden Ansprüche, das aufweist
a) wenigstens einen Düsenkörper (12) mit Anschlußorgan zum Anschluß an einen Plastifizierzylinder (11),
b) Plastifizierzylinder (11) mit unterschiedlichem Innendurchmesser (d,d'), aber stirnseitig identischen Anschlußorganen für den Anschluß des Düsenkörpers (12),
c) zumindest dem jeweiligen Plastifizierzylinder (11) zugeordnete Adapterringe, die die unterschiedlichen Innendurchmesser (d,d') auf den Eingangsdurchmesser (e) des Düsenkörpers (12) überführen.
